# EUROPEAN PATENT APPLICATION

(11) **EP 4 620 864 A1**
(43) Date of publication of application: **24.09.2025**
(21) Application number: 24164536.5
(22) Date of filing: 19.03.2024
(51) Int. Cl.: B65G 1/04, B65G 47/90, B65G 61/00

(54) **TRANSPORT TRAY GRIPPER AND GRIPPER DRIVE SYSTEM**

(71) Applicant: Retail Robotics Manufacturing & Services Sp. z o.o., 43-110 Tychy (PL)
(72) Inventor: OSSOWSKI, Michal, 94-122 Lodz (PL); ZAKRZEWSKI, Michal, 03-285 Warszawa (PL); SEDEK, Jaroslaw, 05-408 Lipowo (PL)
(74) Representative: Markieta, Jaroslaw Franciszek

(57) **Abstract**

The subject of the application is a gripper (1) of a transport tray for automated parcel terminals (ATPs) **characterised in that:** it includes two grips (10L, 10R) and two drive chains (11, 12) the drive chains being supported on sprockets (13L, 13R) and a tensioner (14, 14'), the grips (10L, 10R) are provided with at least two gripping forks (18L, 18R) offset from the axis of the grip and adapted to grip the transport tray, the outer surfaces (19, 19', 20, 20') of the grip forks being inclined into the inside of the fork (18L, 18R), with drive chains (11, 12) running essentially parallel to each other.

## Description

The object of the invention is a transport tray gripper and a gripper drive system.

In the state of the art, there are known automatic points of sale POS using transport containers/trays equipped with grippers to handle a transport tray.

Publication CN208747157U discloses an automated storage device for transport trays nested one inside the other and a tray structure for use in such a device. The tray according to this disclosure has inclined slanting walls, a flat bottom and a horizontal edge curved around the entire circumference. In addition, three limiters are running vertically down the front wall to maintain the distance between the trays when they are stacked. The tray stacking apparatus consists of two side assemblies, i.e., the left side assembly and the right side assembly.

Publication US2020402340A1 discloses an automatic self-service parcel terminal using parcel trays. The automated parcel terminal uses parcel trays to store goods (parcels) of various sizes and transport them inside the terminal. The use of trays enables goods of different sizes and irregular shapes to be stored without imposing strict requirements on their packaging. The parcel tray comprises a tray base and a metal plate (preferably steel) at one end. The steel plate is the mounting point for the electromagnet, which is used to transfer the parcel tray to and from the loader, perpendicular to the travel path of the rail of the conveying machine. The base of the parcel tray is advantageously provided with chamfered corners and tapered sides to guide the parcel tray between the two columns supporting the shelves or into the loader. The tray base can be made from a variety of materials, including steel, stainless steel, various thermoplastics, and composites, among others. The tray moves on rolls that displace in guides.

Publication US2022081211A1 discloses an automatic parcel terminal having one or more entry and pick-up points. The terminal is equipped with a lift cage and a loader that enables specially designed trays to be transported to and from the racking columns on either side of the lift cage. The lift and loader unit enables the loader to handle multiple racking columns at the terminal. The loader has a rear cover configured to protect users from moving parts of the terminal, but also to support trays in the racking column while the loader pulls one tray from the racking column. The unit uses a storage tray that generally has four sides, with two parallel sides having tray side extensions. Advantageously, underneath the tray side extensions, there are toothed coupling racks running transversely to the side of the tray and parallel to each other along the entire length of the tray. The tray is driven directly by pinions.

In some embodiments in US2022081211A1, the coupling racks may have different lengths or may be positioned differently. The tray side extensions also include a bearing surface. The profile of the rack enables very high precision movements. The bearing surfaces are above the coupling racks and extend further outwards than the coupling racks. Bearing surfaces are used to support the trays after they have been placed in the shelf columns between the shelf supports. The bearing surfaces also support the trays when they are placed on the loader; they are also configured to guide the trays during the process of moving from the loader to the shelf columns and vice versa. The support surfaces have tapered ends at both ends to guide the parcel tray onto the loader as it is pulled from the shelf column of the automatic parcel terminal.

The object of the invention is a transport tray gripper for automated parcel terminals. The gripper according to the invention is characterised in that it comprises two grips, and two drive chains, the drive chains being supported on sprockets and a tensioner, the grips being are provided with at least two gripping forks adapted to grip the transport tray, the outer surfaces of the gripping forks being inclined to the inside of the fork, and the drive chains running substantially parallel to each other.

Advantageously, the gripper according to the invention is characterised in that the grips are positioned between the drive chains.

Advantageously, the gripper according to the invention is characterised in that the drive chains are synchronously driven.

Furthermore, the object of the invention is a drive system of a transport tray gripper for automated parcel terminals. The drive system according to the invention is characterised in that it is provided with two sets of grippers that each contain two grips, and two drive chains. The drive chains are supported on sprockets and a tensioner. The grips are fitted with at least two gripping forks adapted to grip the transport tray, with the drive chains running substantially parallel to each other.

The drive system according to the invention is characterised in that the two grippers are mounted on a common frame and are driven by a single drive system via a gear assembly.

The drive system according to the invention is characterised in that the system is driven by a servomotor.

The grippers according to the invention have a compact structure that enables handling of transport trays even of considerable weight. The simple design reduces maintenance and minimises downtime.

The advantageous embodiment of the object of the invention has been shown in greater detail in the following figures, where:
- Fig. 1: shows a front view of a gripper according to the invention;
- Fig. 2: shows a side view of a gripper according to the invention;
- Fig. 3: shows an isometric projection of a drive system according to the invention.
- Fig. 4: shows a front view of a gripper according to the invention in the outermost position;
- Figs. 5 and 6: show individual phases of a cycle of picking up and putting down a transport tray using a gripper according to the invention.

In the automated parcel terminals APTs, various robotic systems are used to move trays that contain stored products. Typically, these are XY Cartesian robots, i.e., with a moving element travelling in a working plane in front of a storage wall provided with a storage rack with drawers in which trays are laid down. The Cartesian robot's task is to retrieve a transport tray from the storage drawer and deliver it to a loading and receiving sluice or, alternatively, to lay down the tray in a stacker that stores empty transport trays. This configuration of the Cartesian robot requires the use of a gripper that provides movement of the transport tray in the Z axis, perpendicular to the XY axis in which the Cartesian robot itself moves.

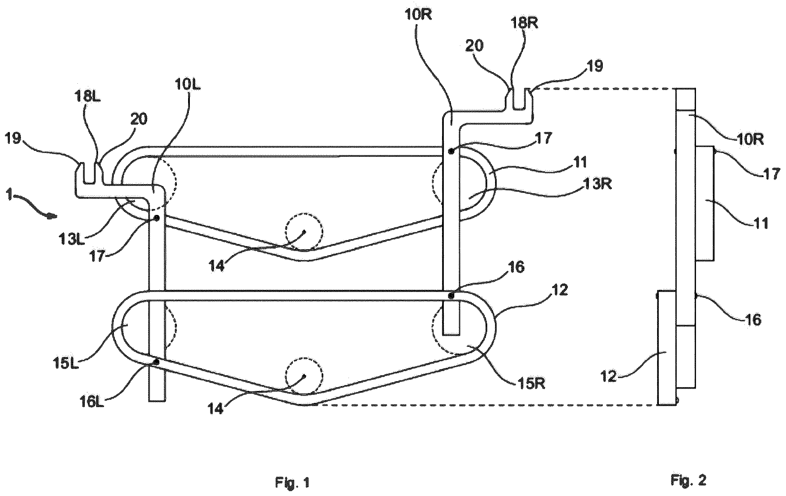

Fig. 1 shows gripper 1 of a transport tray for automated parcel terminals APTs according to a preferred embodiment. The gripper 1 includes two grips 10L, 10R, and two drive chains 11, 12, with the drive chains supported on sprockets 13L, 13R and a tensioner 14, 14'. The grips 10L, 10R are provided with at least two gripping forks 18L, 18R adapted to grip the transport tray, with the outer surfaces 19', 20 of the gripping forks inclined slanting into the inner part of the fork 18L, 18R. The drive chains 11, 12 run essentially parallel to each other.

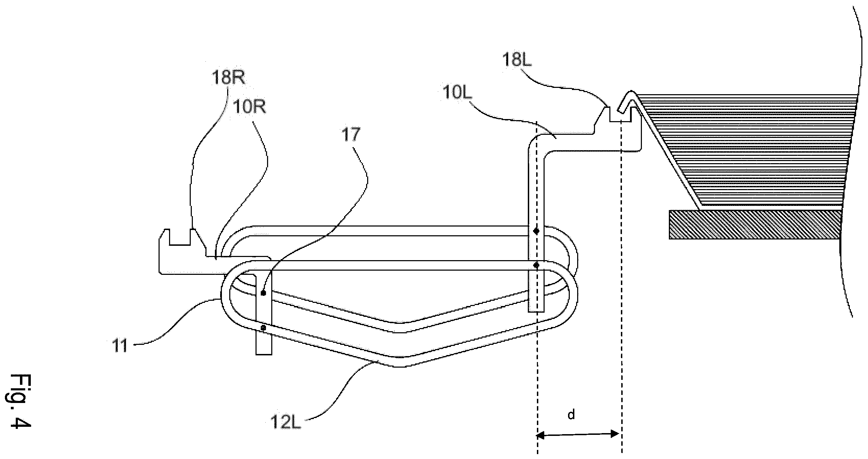

The grips 10L, 10R are positioned between the drive chains 11, 12, in an axial direction parallel to the axis of the drive wheels. The relative placement of the grips between the chains is clearly shown in Fig. 2. Positioning the grips between the drive chains 11, 12 enables the grips to remain stable and does not restrict the path along which the grips move. Fixing the grips 10L, 10R with fixing pins 16, 17, or 16', 17' enables the grips 10L, 10R to move together with the drive chains also in the area of the sprockets 13L, 13R or the tensioner 14, 14'. Linking the grips 10L, 10R to the chains also causes that the gripping forks 18L, 18R can move both horizontally and vertically, making it easier to hook and unhook the transport tray. The gripping forks 18L, 18R are offset from the axis of the grip 10L, 10R so that, when they approach their outermost position, the gripping forks 18L, 18R reach beyond the outline of the drive chain, as shown in Fig. 4. This enables the transport tray to be gripped or put down outside the outline of the gripper system.

The inclined outer surfaces 19, 20 i 19', 20' of the respective gripping forks 18R, 18L engage with the slots of the transport tray. Due to the interaction of the gripping forks with the tray seats, the tray is moved along the guides (not shown) above the transport chain 11 during the movement of the grips. This makes it possible to move the tray horizontally inside the parcel terminal ATP and to move it, for example, from a drawer in a storage rack to a mobile robot in the XY system, i.e., to its movable column part which is provided with a gripper according to the invention. The gripper according to the invention enables the transport tray to be moved horizontally in both directions, i.e., as shown in Fig. 1 to the right and to the left, which makes it possible to put in or take out trays from a storage rack or to put in or take out trays from the loading sluice of an automated parcel terminals.

Typically the drive chains 11, 12 are driven synchronously, making the grips 10R, 10L move parallel to each other.

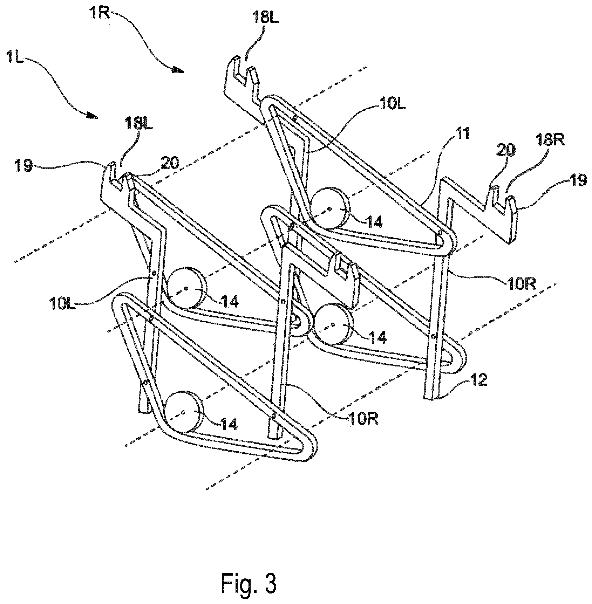

Fig. 3 shows a drive system of a transport tray gripper 1 for automated parcel terminals APTs provided with two grippers 1L, 1R according to the invention. The gripper drive system comprises two grippers (1L, 1R) which are mounted on a common frame and driven from a single drive system via a sprocket assembly (not shown). Driving both grippers through a common drive system is advantageous, however, only synchronous movement of the drive chains is enabled. It is possible to advantageously drive the grippers 1L, 1R using independent drive systems. In the engineering industry, particularly in automated systems, the use of servo drives/servo motors is standard as this enables a feedback loop to be easily built to control the position of the system.

Fig. 4 shows a front view of the gripper according to the invention in an outermost position, in which the fork grips the tray outside the outline of the gripper system. The fork 18L is offset from the axis of the grip 10L by a distance d. This distance can be selected according to the structure of the tray and enables the reach of the gripper to be adjusted beyond the system outline, e.g., for putting down and collecting trays from the shelves of the rack in the automated parcel terminals APT.

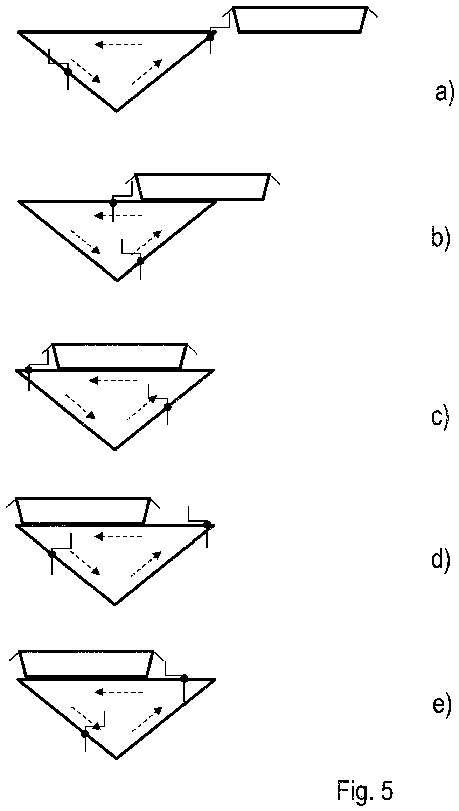

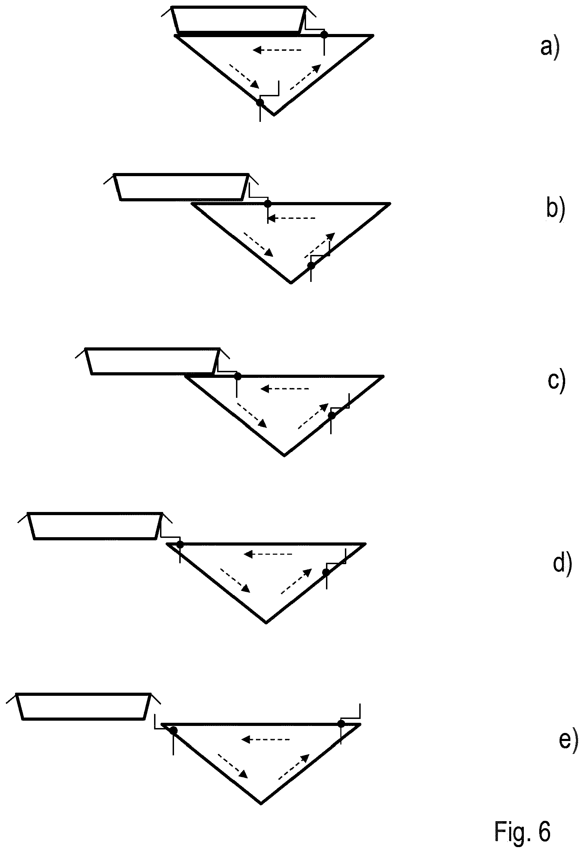

Figs. 5 and 6 show individual phases of a cycle of picking up and putting down the transport tray using the gripper according to the invention. Both the gripper, grips, gripping forks, and the transport tray are shown schematically. For the sake of simplicity, the lower drive chain, which is arranged to hold the grips upright, is not shown. The direction of movement of the grips is indicated by dashed arrows, a dot indicates the point where the grips are attached to the drive chain. In phase a), the tray is taken by the right-hand grip from its storage position, e.g., on a shelf. Then, in phase b), the tray is pulled onto the upper surface of the gripper provided with slides or rollers to facilitate transport of the transport tray. In phase c), the tray is in the transport position on the upper surface of the gripper. In phase c), the tray can be transported by the gripper - in the embodiment where it is attached, for example, to a Cartesian robot - to another location in the storage system, for example in an automated point of sale or storage rack. In the next phase d), the tray is pulled up by the same gripper to the outermost left position, then the gripper following the transport chain is lowered below the edge of the tray; while in phase e), the second gripper is brought to the pushing position from the other side of the transport tray.

The process of putting down the transport tray by means of the gripper according to the invention is shown in the respective phases in Fig. 6. In Fig. 6, phase a) corresponds to phase e) on Fig. 5. In subsequent phases b) and c), the movement of the grip continues in the direction of the dotted arrows and the transport tray is put back into its new storage position on the left side of the gripper outside the outline of the gripper, as shown in phases d) and e).

### List of reference numerals

1, 1L, 1R gripper
10L grip
10R grip
11 drive chain
12 drive chain
13L, 13R sprockets
14, 14'; tensioner
15L, 15R sprockets
16, 17 fixing pins
18L, 18R gripping forks
19, 19' external inclined surfaces of gripping forks
20, 20' internal inclined surfaces of gripping forks

## Claims

1. A gripper (1) of a transport tray for automated parcel terminals (ATPs) **characterised in that:**
it includes two grips (10L, 10R) and two drive chains (11, 12) the drive chains being supported on sprockets (13L, 13R) and a tensioner (14, 14'),
the grips (10L, 10R) are provided with at least two gripping forks (18L, 18R) offset from the axis of the grip and adapted to grip the transport tray, the outer surfaces (19, 19', 20, 20') of the grip forks being inclined into the inside of the fork (18L, 18R), with
drive chains (11, 12) running essentially parallel to each other.

2. The gripper, according to claim 1, **characterised in that** the grips (10L, 10R) are positioned between the drive chains (11, 12).

3. The gripper, according to claim 1 or 2, **characterised in that** the drive chains (11, 12) are driven synchronously.

4. A drive system (1) of a transport tray gripper for automated parcel terminals (APTs) **characterised in that** it is provided with two sets of grippers (1L, 1R) as in claims 1 to 4.

5. The drive system according to claim 4, **characterised in that** the two grippers (1L, 1R) are mounted on a common frame and are driven by a single drive system via a gear assembly.

6. The drive system, according to claim 4, **characterised in that** the grippers (1L, 1R) are mounted on a common frame and driven by independent drive systems.

7. The drive system, according to any of claims 4 to 6, **characterised in that** it is driven by a servomotor.
